# EUROPEAN PATENT SPECIFICATION

(11) **EP 4 048 088 B1**
(45) Date of publication and mention of the grant of the patent: **09.07.2025**
(21) Application number: 20792427.5
(22) Date of filing: 20.10.2020
(51) Int. Cl.: A23J 3/14, A23L 33/115, A23J 3/22, A23L 33/185

(54) **VEGETARIAN BURGER**
HACKFLEISCHANALOG
SUBSTITUT DE VIANDE ÉMINCÉE

(30) Priority: 21.10.2019 EP 19204353; 21.10.2019 EP 19204323; 21.10.2019 EP 19204310; 21.10.2019 EP 19204338
(43) Date of publication of application: 31.08.2022
(73) Proprietor: Unilever IP Holdings B.V., 3013 AL Rotterdam (NL)
(72) Inventor: VAN LEEUWEN, Nicole, Frederique, 4824 AV Breda (NL); BOM, Paul, 4824 AV Breda (NL); MELLEMA, Michel, 6708 WH Wageningen (NL); FLENDRIG, Leonardus, Marcus, 6708 WH Wageningen (NL); HOOS, Peter, Boudewijn, 6708 WH Wageningen (NL); KOPPERT, Remco, Johannes, 6708 WH Wageningen (NL)
(74) Representative: Tjon, Hon Kong Guno
(86) International application number: PCT/EP2020/079438
(87) International publication number: WO 2021/078708

(56) References cited:
- EP-A1- 2 689 670
- EP-A1- 3 508 067
- US-A- 4 376 134
- US-A- 4 495 205
- US-A1- 2005 008 758
- US-A1- 2015 056 346

## Description

### Field of the invention

The present invention relates to a vegetarian burger and to a process for preparing such a vegetarian burger.

### Background of the invention

A burger (or hamburger) is a cooked patty of ground meat, usually beef, that is typically placed inside a sliced bread roll or bun. The patty may be fried or grilled. Hamburgers are often served with cheese, lettuce, tomato, onion, pickles, bacon, or chilli; condiments such as ketchup, mayonnaise, mustard, relish, or "special sauce"; and are frequently placed on sesame seed buns.

Since the term "burger" usually implies beef, for clarity "burger" may be prefixed with the type of meat or meat substitute used, as in beef burger, turkey burger, chicken burger, fish burger or veggie burger.

A veggie burger (or vegetarian burger) is a burger patty that does not contain meat.

These burgers may be made from ingredients like beans, especially soybeans and tofu, nuts, grains, seeds, algae, or fungi such as mushrooms or mycoprotein.

US 4 495 205 A discloses a process for preparing an uncooked meat analog product comprising (a) combining a thawed hydrated TVP (texturized vegetable protein) with oil and a binder composition comprising 0 to 23% albumin, 0 to 23% soy protein isolate, 0 to 38% vital wheat gluten, and 0 to 16% extruded protein fibre; and (b) forming a mass wherein the combined TVP, oil and binder composition are in intimate admixture.

US 4 376 134 A discloses a process for the production of a low cholesterol sausage analog, said process consisting essentially of: 1. formation of an aqueous mixture of flavours, spices, and colouring agents, hereinafter referred to as a flavour solution; 2. addition of textured vegetable protein to the flavour solution, thereby causing hydration of the textured vegetable protein; 3. addition of fibrous food material to the hydrated textured vegetable protein; 4. addition of a liquefied fat and/ or oil component to the above mixture; 5. addition of a binder system and browning components; 6. forming the mixture into patties or further processed into sausage-like links.

### Summary of the invention

The inventors have developed a vegetarian burger in the form of a patty that can be cooked in the same way as ordinary meat burgers to produce a cooked burger that in terms of eating quality and appearance is very similar to meat-based reference products. The vegetarian burger of the present invention is easy to manufacture and can be stored in frozen form until it is prepared for consumption.

The present invention provides a process for preparing a vegetarian burger according to claim 1, comprising the step of mixing hydrated TVP pieces with methyl cellulose, plant protein concentrate, fat, water and defibrillated hydrated texturized fibrous vegetable protein material to produce a vegetarian dough.

According to the invention a vegetarian burger according to claim 10 is provided having an average diameter of 80-150 mm and an average height of 5-15 mm, said burger comprising the following components:
(a) 30-80% by weight of the vegetarian burger of hydrated textured vegetable protein (TVP) pieces;
(b) 15-50% by weight of the vegetable burger of a binder suspension containing the following ingredients
   (b1) 2-12% by weight of the binder suspension of methyl cellulose;
   (b2) 0.3-12% by weight of the binder suspension of plant protein selected from patatin, mung bean protein and combinations thereof;
   (b3) 25-70% by weight of the binder suspension of fat;
   (b4) 25-70% by weight of the binder suspension of water;
wherein the combination of components (a) to (b) constitutes at least 80 wt.%, preferably at least 90 wt.% of the vegetarian burger, and wherein the vegetarian burger preferably comprises hydrated TVP microfibers in the range of 2-28 wt.%, preferably 4-25 wt.%, more preferably 5-20 wt.% and most preferably 6-18 wt.% by weight of the vegetarian burger.

The vegetarian burger of the present invention comprises hydrated TVP pieces that are held together by a binder suspension that contains water, fat, methyl cellulose and the plant protein. The binder suspension acts as a lubricant and a glue that allows for the preparation of a coherent dough that can be pumped and/or shaped into a burger, and that ensures that the burger does not fall apart during storage, handling and preparation of the vegetarian burger. During preparation of the vegetarian burger, the binder suspension undergoes a transition that has a favourable impact on the texture and taste (e.g. flavour release) of the ready-to-eat vegetarian burger.

According to the invention a process is provided for preparing a vegetarian burger comprising the step of mixing hydrated TVP pieces with methyl cellulose, plant protein concentrate, fat, water and defibrillated hydrated texturized fibrous vegetable protein (TFVP) material to produce a vegetarian dough;
said burger comprising hydrated TVP microfibers in the range of 2-28 wt.%, preferably 4-25 wt.%, more preferably 5-20 wt.% and most preferably 6-18 wt.% of the vegetarian burger (wet weight),
whereby the hydrated TVP microfibers are prepared by soaking dry texturized fibrous vegetable protein (TFVP) material with water and by defibrillating the material to release the hydrated TVP microfibers,
whereby said burger contains contain no animal products and whereby said vegetarian burger contains, calculated by weight of the dry matter of the burger, 2.5-10 wt.%, more preferably 3.0-9.0 wt.%, most preferably 5.0-8.0 wt.% of methyl cellulose.

Further provided is a vegetarian burger comprising hydrated TVP pieces that are held together by a binder suspension that contains water, fat, methyl cellulose and plant protein concentrate said burger comprising hydrated TVP microfibers in the range of 2-28 wt.%, preferably 4-25 wt.%, more preferably 5-20 wt.% and most preferably 6-18 wt.% of the vegetarian burger (wet weight), said burger contains no animal products, and whereby said vegetarian burger contains, calculated by weight of the dry matter of the burger, 2.5-10 wt.%, more preferably 3.0-9.0 wt.%, most preferably 5.0-8.0 wt.% of methyl cellulose.

Is also disclosed (not part of the invention) a process of preparing the vegetarian burger of the present invention is provided, said process comprising:
- mixing textured vegetable protein (TVP) particles with water to produce hydrated TVP pieces;
- mixing the hydrated TVP pieces with methyl cellulose, plant protein concentrate, fat and water to produce a vegetarian dough, wherein the plant protein concentrate contains, calculated by weight of the dry mater of the plant protein concentrate, at least 50 wt.% plant protein selected from patatin, mung bean protein and combinations thereof;
- shaping the vegetarian dough into a patty.

### Detailed description of the invention

The words 'comprising' and 'containing' as used herein should not be interpreted restrictively as meaning 'consisting of'. In other words, besides the features listed after these words, non-listed features may be present.

Unless specified otherwise, numerical ranges expressed in the format 'from x to y' or 'x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition. Also, unless indicated otherwise, weight percentages as based on wet weight.

The term "water content" as used herein, unless indicated otherwise, relates to the total water content.

The term "textured or texturized vegetable protein (TVP)" as used herein refers to a food ingredient made from edible protein sources and characterised by having structural integrity and identifiable texture such that each unit will withstand hydration in cooking and other procedures used in preparing the food for consumption. TVP is typically produced by extrusion.

The terms "TVP particle" or "dry TVP particle" are interchangeably used to refer to the dry TVP.

The terms "TVP piece" or "hydrated TVP piece" are interchangeably used to refer to the hydrated TVP. The hydrated TVP pieces can be prepared by soaking dry TVP particles with water. Dry TVP particles are commercially available. These dry TVP particles are typically produced by extrusion cooking and drying.

The term "hydrated TVP microfibers" refers to defibrillated hydrated TFVP material which can be prepared by soaking dry texturized fibrous vegetable protein (TFVP) material with water and by defibrillating the material to release the hydrated TVP microfibers. The term "texturized fibrous vegetable protein material" as used herein refers to pieces of texturized vegetable protein that comprise aligned proteinaceous fibers. Dry TFVP materials are commercially available. The terms "defibrillated hydrated TFVP material" and " hydrated TVP microfiber" are used interchangeably.

The term "mung bean" as used herein refers to the pulses of a legume that is known under the scientific name *Vigna radiata.*

The term "patatin" as used herein refers to a glycoprotein that is found in potatoes (*Solanum tuberosum*)*.* The main function of patatin is as a storage protein but it also has lipase activity and can cleave fatty acids from membrane lipids. Patatin makes up about 40% of the soluble protein in potato tubers.

The term "non-denatured" as mentioned herein in relation to patatin or mung bean protein refers to protein that still has the secondary structure which is present in protein that is in its native state.

The term "caramel" as used herein, unless indicated otherwise, refers to a water-soluble food colouring that is made by heating carbohydrates either alone or in the presence of acids, alkalis, and/or salts. Carbohydrates used the commercial production of caramel colouring include fructose, glucose, invert sugar, sucrose, malt syrup, molasses, starch hydrolysates, and fractions thereof. The acids that may be used are sulfuric, sulfurous, phosphoric, acetic, and citric acids; the alkalis are ammonium, sodium, potassium, and calcium hydroxides; and the salts are ammonium, sodium, and potassium carbonate, bicarbonate, phosphate (including mono- and dibasic), sulfate, and bisulfite. Internationally, the United Nations Joint Food and Agriculture Organization/World Health Organization Expert Committee on Food Additives (JECFA) recognizes four classes of caramel colour, differing by the reactants used in their manufacture, each with its own INS and E number:

| Class | INS/E number | Description |
|---|---|---|
| I | 150a / E 150a | Plain caramel |
| II | 150b / E 150b | Caustic sulfite caramel |
| III | 150c / E 150c | Ammonia caramel |
| IV | 150d / E 150d | Sulfite ammonia caramel |

The term "burnt sugar" as used herein refers to caramalised sugar, also known as "caramel sugar", that has been produced by heating sugar without the use of chemical reactants that are used in the production of the above mentioned caramel colourings.

The term "vegetable carbon" as used herein refers to particles of carbonized vegetable material, such as wood, cellulose residues, peat, coconut and other shells. The particles of carbonized vegetable material largely consist of finely divided carbon, but can contain minor amounts of nitrogen, hydrogen and oxygen. Some moisture may be absorbed on the particles after manufacture. The particles of carbonized vegetable material may be activated at high temperature.

The terms "oil" and "fat" as used herein refer to a glyceride component that contains at least 80 wt.% of glycerides selected from triglycerides, diglycerides and combinations thereof.

The term "liquid oil" as used herein refers to an oil that contains no solid at 20°C (N₂₀ = 0%). The solid fat content at 20°C can be determined using ISO method ISO 8292-2:2008.

The term "solid fat" as used herein refers to a fat that contains at least 20% solid fat at 20°C (N₂₀ ≥20%).

The term "dry matter" as used herein refers to the matter that remains after water and other volatile components have been removed by evaporation using a forced-air oven (2 hours at 103°C, or longer if not all moisture has been removed).

Besides the hydrated TVP pieces and the binder suspension the vegetarian burger may contain other ingredients in the form of particulate material having a particle weight of at least 1 mg. Pieces of vegetable or spices are an example of such a particulate material.

The vegetarian burger of the present invention is preferably uncooked, allowing local preparation of the cooked burger using conventional cooking techniques such as grilling and frying. Here "uncooked" means that the complete vegetarian burger, i.e. the vegetarian burger as whole, has not been heated to temperatures in excess of 60°C.

Ingredients of the burger, such as the TVP pieces, however, may have been heated to temperatures in excess of 60°C during the production thereof.

In another advantageous embodiment, the vegetarian burger is frozen. More preferably the burger is a frozen uncooked burger. Frozen distribution and storage offers the advantage that, especially when the vegetarian burger is uncooked, the product can be stored for a long time until it is prepared for consumption. The 'meaty' character of the vegetarian burger of the present invention is well retained during frozen storage.

The vegetarian burger typically has a weight of 35-200 grams, more preferably of 40-140 grams.

The average height of the vegetarian burger is preferably in the range of 8-13 mm, most preferably in the range of 9-12 mm.

The water content of the vegetarian burger typically lies in the range of 50-70%, more preferably in the range of 55-65% by weight of the vegetarian burger.

The protein content of the vegetarian burger preferably lies in the range of 10-20%, more preferably in the range of 12-18% by weight of the vegetarian burger.

Preferably, at least 70 wt.%, more preferably at least 80 wt.% of the total amount of protein of the vegetarian burger is plant protein selected from soy protein, legume protein, wheat protein, rice protein and combinations thereof. Examples of legume proteins that can be used include lentil protein, pea protein, fababean protein, lupin protein, and combinations thereof.

According to a particularly preferred embodiment, at least 50 wt.%, more preferably at least 60 wt.% and most preferably at least 75 wt.% of the total amount of protein of the vegetarian burger is soy protein.

The total fat content of the vegetarian burger preferably lies in the range of 8-22%, more preferably in the range of 10-20% by weight of the vegetarian burger.

The total amount of fat in the vegetarian burger typically has the following fatty acid composition:
20-40 wt.% palmitic acid;
0-20 wt.% stearic acid;
12-60 wt.% oleic acid;
10-50 wt.% polyunsaturated fatty acid;
wherein the total amount of saturated fatty acids does not exceed 50 wt.%. The fatty acid composition of the fat can be determined using ISO method 12966-4: 2015.

The vegetarian burger preferably contains 1-5%, more preferably 1.5-3.5% by weight of the vegetarian burger of dietary fiber.

Calculated by weight of the dry matter of the vegetarian burger, the burger preferably contains 3-15 wt.%, most preferably 4-9 wt.% of dietary fiber.

Carbohydrates are preferably contained in the vegetarian burger in a concentration of 1-8%, more preferably 2-6% by weight of the vegetarian burger of carbohydrates.

Calculated by weight of the dry matter of the vegetarian burger, the burger preferably contains 2-20 wt.%, most preferably 4-15 wt.% of carbohydrates.

The starch content of the vegetarian burger, calculated by weight of the dry matter of the burger, preferably lies in the range of 2-18 wt.%, more preferably in the range of 3-14 wt.%.

Preferably, the burger contains, calculated by weight of the dry matter of the burger, 0-4% sugars, most preferably 0-2% sugars.

The vegetarian burger of the present invention preferably contains 0.2-3%, more preferably 0.3-2% salt by weight of the vegetarian burger. Here the term salt refers to sodium chloride, potassium chloride and combinations thereof.

The vegetarian burger preferably has an open structure, i.e. the interior of the burger comprises small spaces that are filled with air. Typically, the burger has a density of 0.8 to 1.2 g/L, more preferably a density of 0.95 to 1.15 g/L.

The pH of the vegetarian burger preferably lies in the range of pH 5 to pH 7.5, more preferably in the range of pH 5.8 to pH 6.8.

In a preferred embodiment, the vegetarian burger contains 40-75%, more preferably 50-72% by weight of the vegetarian burger of the hydrated TVP pieces.

The hydrated TVP pieces can be prepared by soaking dry TVP particles with water. Dry TVP particles are commercially available. These dry TVP particles are typically produced by extrusion cooking and drying.

The hydrated TVP pieces in the vegetarian burger typically have a water content of at least 50%, more preferably of 60-78% by weight of the hydrated TVP pieces.

Protein is preferably contained in the hydrated TVP pieces in a concentration, calculated by weight of the dry matter of the hydrated TVP pieces, of at least 50 wt.%, more preferably of at least 60 wt.%, most preferably of at least 62 wt.%.

The hydrated TVP pieces present in the vegetarian burger can have different shapes, such as sphere-like, fiber-like and sheet-like.

The hydrated TVP pieces in the vegetarian burger typically contain, calculated by weight of the dry matter of the hydrated TVP pieces, 50-80 wt.% protein, 0-5 wt.% fat and 3-30 wt.% dietary fiber. More preferably, the hydrated TVP pieces in the vegetarian burger contain, calculated by weight of the dry matter of the hydrated TVP pieces, 65-75 wt.% protein, 0.5-4 wt.% fat and 6-24 wt.% dietary fiber.

Preferably, at least 80 wt.%, more preferably at least 90 wt.% of the total amount of protein of the hydrated TVP pieces is plant protein selected from soy protein, legume protein, wheat protein, rice protein and combinations thereof. Examples of legume proteins that can be used include lentil protein, pea protein, fababean protein, lupin protein and combinations thereof.

In a more preferred embodiment, at least 80 wt.%, more preferably at least 90 wt.% and most preferably at least 95 wt.% of the total amount of protein of the hydrated TVP pieces is protein selected from soy protein, pea protein, gluten and combinations thereof.

According to a particularly preferred embodiment, at least 70 wt.%, more preferably at least 80 wt.%, most preferably at least 85 wt.% of the total amount of protein of the hydrated TVP pieces is soy protein.

The hydrated TVP pieces of the vegetarian burger preferably include TVP chunks having a weight of in the range of 20-800 mg. Preferably, the vegetarian burger contains 30-70%, more preferably 35-60%, most preferably 36-55% by weight of the vegetarian burger of the hydrated TVP chunks.

The hydrated TVP chunks in the vegetarian burger typically have a water content of at least 50%, more preferably of 60-78% by weight of the hydrated TVP chunks.

Protein is preferably contained in the hydrated TVP chunks in a concentration, calculated by weight of the dry matter of the hydrated TVP chunks, of at least 50 wt.%, more preferably of at least 60 wt.%, most preferably of at least 62 wt.%.

The hydrated TVP chunks present in the vegetarian burger can have different shapes, such as sphere-like-like and sheet-like.

The hydrated TVP chunks in the vegetarian burger typically contain, calculated by weight of the dry matter of the hydrated TVP chunks, 50-80 wt.% protein, 0-5 wt.% fat and 3-30 wt.% dietary fiber. More preferably, the hydrated TVP chunks in the vegetarian burger contain, calculated by weight of the dry matter of the hydrated TVP chunks, 65-75 wt.% protein, 0.5-4 wt.% fat and 6-24 wt.% dietary fiber.

Preferably, at least 80 wt.%, more preferably at least 90 wt.% of the total amount of protein contained in the hydrated TVP chunks is vegetable protein selected from soy protein, legume protein, wheat protein, rice protein and combinations thereof.

Examples of legume proteins that can be used include lentil protein, pea protein, fababean protein, lupin protein and combinations thereof
In a more preferred embodiment, at least 80 wt.%, more preferably at least 90 wt.% and most preferably at least 95 wt.% of the total amount of protein of the hydrated TVP chunks is protein selected from soy protein, pea protein, gluten and combinations thereof.

According to a particularly preferred embodiment, at least 70 wt.%, more preferably at least 80 wt.%, most preferably at least 85 wt.% of the total amount of protein of the hydrated TVP chunks is soy protein.

According to further preferred embodiment, the hydrated TFVP pieces include hydrated TVP microfibers. These microfibers are believed to contribute in an advantageous manner to the cohesiveness, elasticity and/or bite of the vegetarian burger.

The amount of hydrated TVP microfibers in the minced meat analogue is determined by the following procedure:
- Introduce 50 grams of minced meat analogue into a beaker (1 litre PP beaker, BRAND, Germany; height 181 mm, internal diameter bottom 89 mm, internal diameter top 112 mm) together with 1 litre of demi-water after both the minced meat analogue and the water have been equilibrated at 20°C;
- Stir the contents of the beaker with a stirring magnet (length 78mm, triangular with 15mm sides) at 200 rpm using a stirring plate (IKA, type RTC basic, Staufen, Germany);
- After 30 min the stirring is stopped for 1 minute to remove floating fat with a metal tablespoon, and then the stirring is continued.
- After 60 minutes, the stirring is stopped and exactly 10 seconds after the stirring was stopped a glass vial (VWR, Amsterdam, height 76.2 mm, outer diameter 72.2 mm) is fully submerged in the plastic beaker using tweezers and the resulting overflow is collected in the vial until the vial is completely filled (225 ml);
- The collected liquid is poured over a stainless steel mesh sieve (mesh size: 1 mm), after the weight of the sieve has been determined. Next, the sieve is placed under an angle of 30 degrees to let excess water drip away. After 5 minutes droplets are removed from the metal rim of the sieve with a paper towel and the sieve is weighed again, to determine the weight of fibrous retentate;
- This procedure is repeated 4 times and the average weight is calculated.

The hydrated TVP microfibers constitute 2-28 wt.%, preferably 4-25 wt.%, more preferably 5-20 wt.% and most preferably 6-18 wt.% of the vegetarian burger (wet weight).

The hydrated TVP microfibers are prepared by soaking dry texturized fibrous vegetable protein (TFVP) material with water and by defibrillating the material to release the hydrated TVP microfibers. The term "texturized fibrous vegetable protein material" as used herein refers to pieces of texturized vegetable protein that comprise aligned proteinaceous fibers. Dry TFVP materials are commercially available.

Protein is preferably contained in the hydrated TVP microfibers in a concentration, calculated by weight of the dry matter of the hydrated TVP microfibers, of at least 50 wt.%, more preferably of at least 60 wt.%, most preferably of at least 62 wt.%.

The hydrated TVP microfibers typically contain, calculated by weight of the dry matter of the hydrated TVP microfibers, 50-80 wt.% protein, 0-5 wt.% fat and 3-30 wt.% dietary fiber. More preferably, the hydrated TVP microfibers contain, calculated by weight of the dry matter of the hydrated TVP microfibers, 65-75 wt.% protein, 0-3 wt.% fat and 6-15 wt.% dietary fiber.

Preferably, at least 80 wt.%, more preferably at least 90 wt.% of the total amount of protein of the hydrated TVP microfibers is vegetable protein selected from soy protein, legume protein, wheat protein, rice protein and combinations thereof. Examples of legume proteins that can be used include lentil protein, pea protein, fababean protein, lupin protein and combinations thereof
According to a preferred embodiment, the hydrated TVP microfibers contain, calculated by weight of the dry matter contained therein, 70-100 wt.% wt.% soy protein and 0-30 wt.% gluten, more preferably 80-99 soy protein and 1-20 wt.% gluten, more preferably 90-98 soy protein and 2-10 wt.% gluten.

According to another preferred embodiment, the hydrated TVP microfibers contain, calculated by weight of the dry matter contained therein, 0.5-10 wt.% starch, more preferably 1-5 wt.% starch.

The vegetarian burger preferably comprises 18-48%, more preferably 20-45% and most preferably 25-42% by weight of the vegetarian burger, of the binder suspension containing water, fat, methyl cellulose and the plant protein.

The water content of the binder suspension preferably lies in the range of 28-60%, more preferably in the range of 30-50% by weight of the binder suspension.

Methyl cellulose is preferably present in the binder suspension in a concentration of 2.5-10%, more preferably of 3-8% by weight of the binder suspension.

The vegetarian burger contains, calculated by weight of the dry matter of the burger, 2.5-10 wt.%, more preferably 3.0-9.0 wt.%, most preferably 5.0-8.0 wt.% of methyl cellulose.

The methyl cellulose employed in accordance with the present invention preferably has a methoxyl content of 20% to 40%, more preferably of 24% to 36%.

In another preferred embodiment, the methyl cellulose employed has a viscosity at a temperature of 20°C and a concentration of 2 wt.% in water of 20,000-1,000,000 cP, more preferably of 30,000-500,000 cP and most preferably of 35,000-200,000 cP.

The molecular weight of the methyl cellulose preferably lies in the range of 100 to 250 kDa, more preferably in the range of 150 to 220 kDa.

According to a preferred embodiment, the methyl cellulose has a gelation temperature of at least 30°C, more preferably a gelation temperature in the range of 35°C to 60°C, most preferably a gelation temperature in the range of 40°C to 50°C.

The plant protein selected from patatin, mung bean protein and combinations thereof is preferably present in the binder suspension in a concentration of 0.5-10, more preferably of 0.6-9% by weight of the binder suspension.

The vegetarian burger preferably contains, calculated by weight of the dry matter of the burger, 0.3-10 wt.%, more preferably 0.6-9 wt.% of the plant protein.

In one embodiment of the present invention, the plant protein is patatin.

Patatin is preferably present in the binder suspension in a concentration of 0.5-6, more preferably of 0.6-4% by weight of the binder suspension.

Patatin is preferably present in the vegetarian burger in non-denatured form. Accordingly, in a preferred embodiment, non-denatured patatin is present in the binder suspension in a concentration of 0.5-6%, more preferably of 0.6-4% by weight of the binder suspension.

The vegetarian burger preferably contains, calculated by weight of the dry matter of the burger, 0.3-6.0 wt.%, more preferably 0.6-5.0 wt.% of patatin.

Calculated by weight of the dry matter of the vegetarian burger, non-denatured patatin is preferably present in the vegetable burger in a concentration of 0.3-6.0 wt.%, more preferably 0.6-5.0 wt.%.

Preferably, patatin has been introduced into the vegetarian burger in the form of potato protein fraction that contains, calculated by weight of dry matter, at least 50 wt.%, more preferably at least 60 wt.% and most preferably at least 70 wt.% patatin.

Typically, patatin constitutes at least 60 wt.%, more preferably at least 70 wt.% and most preferably at least 75 wt.% of the potato protein that is present in the vegetarian burger.

Methyl cellulose and patatin are typically present in the vegetarian burger in a weight ratio of 1:1 to 8:1. More preferably, methyl cellulose and patatin are present in the vegetarian burger in a weight ratio of 3:2 to 6:1.

In another embodiment of the invention, the plant protein is mung bean protein.

Mung bean protein is preferably present in the binder suspension in a concentration of 1-10%, more preferably of 1.5-9% by weight of the binder suspension.

Mung bean protein is preferably present in the vegetarian burger in non-denatured form. Accordingly, in a preferred embodiment, non-denatured mung bean protein is present in the binder suspension in a concentration of 1-10%, more preferably of 1.5-9% by weight of the binder suspension.

The vegetarian burger preferably contains, calculated by weight of the dry matter of the vegetarian burger, 1-10 wt.%, more preferably 2-9 wt.% of mung bean protein.

Calculated by weight of the dry matter of the vegetarian burger, non-denatured mung bean protein is preferably present in the vegetable burger in a concentration of 1-10 wt.%, more preferably 2-9 wt.%.

Methyl cellulose and mung bean protein are typically present in the vegetarian burger in a weight ratio of 1:3 to 5:1. More preferably, methyl cellulose and mung bean protein are present in the vegetarian burger in a weight ratio of 1:2 to 4:1, most preferably in a weight ratio of 1:1 to 3:1.

The functionality of the mung bean protein can be improved by the presence of calcium cation (Ca²⁺). Accordingly, in a preferred embodiment, the vegetarian burger contains 0.04-0.5%, more preferably 0.08-0.4% calcium cation by weight of the mung bean protein of the vegetarian burger. Calcium may be introduced into the vegetarian burger in the form of calcium hydroxide, calcium lactate, calcium sulfate and/or calcium carbonate.

The fat content of the binder suspension preferably lies in the range of 30-68%, more preferably of 35-65
Unlike known vegetarian burgers, the vegetarian burger of the present invention preferably contains liquid oil and solid fat as separate components. A fraction of the solid fat particles may be captured as distinguishable fat particles in droplets of liquid oil, thereby reducing the liquidity of these oil droplets. It was found that inclusion that separate inclusion of these two components offers advantages in terms of manufacture and product quality.

Accordingly, in a particularly preferred embodiment, the fat that is contained in the binder suspension comprises, calculated by weight of said fat, (i) 25-75% of liquid oil having a saturated fatty acid content of less than 30 wt.% and (ii) 25-75% particles of solid fat having a saturated fatty acid content of more than 50 wt.%. Even more preferably, the fat contained in the binder suspension comprises, calculated by weight of said fat, (i) 30-60% of the liquid oil and (ii) 40-70% of the particles of solid fat.

The binder suspension preferably contains 10-40%, more preferably 12-30% by weight of the binder emulsion of the liquid oil.

The binder suspension preferably contains 10-40%, more preferably 15-32% by weight of the binder emulsion of the particles of solid fat.

The liquid oil preferably contains less than 25 wt.%, more preferably less than 20 wt.% saturated fatty acids.

Preferably, the liquid oil contains at least 30 wt.% of polyunsaturated fatty acids, more preferably at least 50 wt.% of polyunsaturated fatty acids.

The liquid oil is preferably selected from sunflower oil, soybean oil, rapeseed oil, cottonseed oil, safflower oil, olive oil, linseed oil, corn oil and combinations thereof.

The solid fat present in the particles of solid fat is preferably selected from palm stearin, palm mid fraction, hydrogenated vegetable oils and combinations thereof. Most preferably, the solid fat is selected from palm stearin, palm mid fraction and combinations thereof.

The solid fat in the particles of solid fat preferably has a solid fat content at 30°C of at least 25%, more preferably of at least 30% as determined using ISO method 8292-1:2008.

The solid fat in the particles of solid fat typically has a slip melting point of at least 45°C, more preferably a slip melting point of at least 48°C as determined using ISO method 6321:2002.

The liquid oil and the particles of solid fat are preferably present in the binder suspension in a weight ratio that lies in the range of 1:3 to 3:1, more preferably in the range of 1:2 to 2:1.

The combined total amount of liquid oil and particles of solid fat typically constitutes 25-70% by weight, more preferably 30-60% by weight of the binder emulsion.

In accordance with a preferred embodiment, at least 80 wt.% of the particles of solid fat in the binder emulsion have a particle size, as determined by laser diffraction, of in the range of 30-350 µm.

The water content of the binder suspension preferably lies in the range of 28-65%, more preferably of 32-60% by weight of the binder suspension.

Together, the water and fat present in the binder suspension preferably constitute at least 50 wt.%, more preferably at least 60 wt.% and most preferably 70 wt.% of said binder suspension.

Taken together, the methyl cellulose, the plant protein, fat and water present in the binder suspension preferably constitutes at least 60 wt.%, more preferably at least 70 wt.% and most preferably at least 80 wt.% of said binder suspension.

Besides hydrated TVP pieces, methyl cellulose, the plant protein, fat and water, the vegetarian burger of the present invention can contain additional ingredients such as herbs, spices, sugars, flavouring, colouring, emulsifiers, hydrocolloids, vitamins, minerals and combinations thereof.

Preferably, the vegetarian burger comprises added caramelised material selected from caramel, burnt sugar, malt extract and combinations thereof. More preferably, the vegetarian burger comprises 0.01-1%, by weight of the vegetarian burger of the caramelized material.

The caramelised material applied in the vegetarian burger preferably is caramel, burnt sugar or a combination thereof. According to a particularly preferred embodiment, the caramel material employed in the binder suspension is burnt sugar. Typically, the burnt sugar has a sugar content of at least 80 wt.%, more preferably of at least 90 wt.%, calculated by weight of the burnt sugar.

According to a particularly preferred embodiment, the burger contains vegetable carbon. Here, the term "vegetable carbon" refers to particles of carbonized vegetable material.

The application of vegetable carbon in the binder suspension of the vegetarian burger, especially when applied in combination with caramelised material, significantly increases the quality of the ready-to-eat burger as perceived by the end consumer. The ready-to-eat burger has a very attractive appearance that is very similar to that of a grilled or fried burger.

According to a preferred embodiment, the vegetable carbon is a form of finely divided carbon produced by steam activation of carbonized raw material of vegetable origin that has been assigned E number E 153. Preferably, the vegetarian burger contains 0.01-0.3%, more preferably 0.02-0.2% and most preferably 0.03-0.1% by weight of the vegetarian burger of vegetable carbon.

According to a particularly preferred embodiment, the vegetable carbon is contained in the binder suspension.

Preferably, not more than 20 wt.%, more preferably not more than 10 wt.% of the vegetable carbon of the burger is contained within the hydrated TVP pieces.

The vegetable carbon preferably has a particle size distribution, determined by laser diffraction, that meets the following condition: at least 80 wt.% of the carbon particles has a size within the range of 0.5 and 50 µm. Vegetable carbon may suitably be introduced in the form of a suspension.

The present invention also provides a vegetarian burger comprising hydrated TVP pieces that are held together by a binder suspension that contains water, fat, methyl cellulose and plant protein concentrate said burger comprising hydrated TVP microfibers in the range of 2-28 wt.%, preferably 4-25 wt.%, more preferably 5-20 wt.% and most preferably 6-18 wt.% of the vegetarian burger (wet weight), said burger contains contain no animal products, and
whereby said vegetarian burger contains, calculated by weight of the dry matter of the burger, 2.5-10 wt.%, more preferably 3.0-9.0 wt.%, most preferably 5.0-8.0 wt.% of methyl cellulose;
preferably, whereby the hydrated TVP pieces of the vegetarian burger include TVP chunks having a weight of in the range of 20-800 mg,
whereby preferably, the vegetarian burger contains 30-70%, more preferably 35-60%, most preferably 36-55% by weight of the vegetarian burger of the hydrated TVP chunks, and preferably whereby
the hydrated TVP chunks in the vegetarian burger contain, calculated by weight of the dry matter of the hydrated TVP chunks, 50-80 wt.% protein, 0-5 wt.% fat and 3-30 wt.% dietary fiber,
more preferably, 65-75 wt.% 20 protein, 0.5-4 wt.% fat and 6-24 wt.% dietary fiber;
preferably, whereby the hydrated TVP microfibers contain, calculated by weight of the dry matter of the hydrated TVP microfibers, 50-80 wt.% protein, 0-5 wt.% fat and 3-30 wt.% dietary fiber, more preferably, 65-75 wt.% protein, 0-3 wt.% fat and 6-15 wt.% dietary fiber;
preferably, wherein the vegetarian burger contains liquid oil and solid fat as separate components;
preferably, wherein calculated by weight of the dry matter of the vegetarian burger, non-denatured patatin is preferably present in the vegetable burger in a concentration of 0.3-6.0 wt.%, more preferably 0.6-5.0 wt.% and preferably whereby methyl cellulose and patatin are present in the vegetarian burger in a weight ratio of 1:1 to 8:1, more preferably, in a weight ratio of 3:2 to 6:1.

Is also described (not part of the invention) a method of preparing a vegetarian burger according to the present invention for consumption, said method comprising frying or grilling the vegetarian burger to produce a cooked vegetarian burger and placing the cooked vegetarian burger inside a cut bun.

Together with the cooked vegetarian burger other ingredients may be placed inside the cut bun. Examples of such ingredients include cheese, lettuce, tomato, onion, pickles, bacon, or chilli; condiments such as ketchup, mayonnaise, mustard, relish, or "special sauce".

As mentioned above the present invention provides a process for preparing a vegetarian burger comprising the step of mixing hydrated TVP pieces with methyl cellulose, plant protein concentrate, fat, water and defibrillated hydrated texturized fibrous vegetable protein (TFVP) material to produce a vegetarian dough;
said burger comprising hydrated TVP microfibers in the range of 2-28 wt.%, preferably 4-25 wt.%, more preferably 5-20 wt.% and most preferably 6-18 wt.% of the vegetarian burger (wet weight),
whereby the hydrated TVP microfibers are prepared by soaking dry texturized fibrous vegetable protein (TFVP) material with water and by defibrillating the material to release the hydrated TVP microfibers,
whereby said burger contains contain no animal products and whereby said vegetarian burger contains, calculated by weight of the dry matter of the burger, 2.5-10 wt.%, more preferably 3.0-9.0 wt.%, most preferably 5.0-8.0 wt.% of methyl cellulose;
preferably wherein the defibrillated hydrated TFVP material and the hydrated TVP pieces are mixed in a weight ratio that lies in the range of 1:3 to 3:1, more preferably in the range of 1:2 to 2:1;
preferably, wherein liquid oil and solid fat particles are added separately to enable the preparation of the vegetarian burger at ambient or below ambient temperatures as both the fat particles and the liquid oil can easily be dispersed throughout the product mass during mixing;
preferably, wherein during the step of mixing the ingredients of the burger, the temperature of these ingredients is kept in the range of -5°C to 30°C more preferably in the range of -3°C to 20°C, most preferably in the range of -2°C to 16°C;
preferably, wherein the hydrated TVP microfiber comprise protein in a concentration, calculated by weight of the dry matter of the hydrated TVP microfibers, of at least 50 wt.%, more preferably of at least 60 wt.%, most preferably of at least 62 wt.%;
preferably, whereby the hydrated TVP pieces of the vegetarian burger include TVP chunks having a weight of in the range of 20-800 mg,
whereby preferably, the vegetarian burger contains 30-70%, more preferably 35-60%, most preferably 36-55% by weight of the vegetarian burger of the hydrated TVP chunks, whereby preferably the hydrated TVP chunks in the vegetarian burger contain, calculated by weight of the dry matter of the hydrated TVP chunks, 50-80 wt.% protein, 0-5 wt.% fat and 3-30 wt.% dietary fiber,
more preferably, 65-75 wt.% 20 protein, 0.5-4 wt.% fat and 6-24 wt.% dietary fiber;
preferably, whereby the hydrated TVP microfibers contain, calculated by weight of the dry matter of the hydrated TVP microfibers, 50-80 wt.% protein, 0-5 wt.% fat and 3-30 wt.% dietary fiber, more preferably, 65-75 wt.% protein, 0-3 wt.% fat and 6-15 wt.% dietary fiber;
preferably, wherein the hydrated TVP microfibers contain, calculated by weight of the dry matter of the hydrated TVP microfibers, 0.5-10 wt.% starch, more preferably 1-5 wt.% starch.

Is also described (not part of the invention) a process of preparing a vegetarian burger as described herein before, said process comprising:
i. mixing textured vegetable protein (TVP) particles with water to produce hydrated TVP material;
ii. mixing the hydrated TVP pieces with methyl cellulose, plant protein concentrate, fat and water to produce a vegetarian dough, wherein the plant protein concentrate contains at least 50 wt.% plant protein selected from patatin and mung bean protein by weight of dry matter;
iii. shaping the vegetarian dough into a patty.

The TVP particles employed in the present process preferably have a water content, calculated by weight of the TVP particles, of not more than 15 wt.%, more preferably of not more than 12 wt.%, most preferably of not more than 10 wt.%.

The TVP particles preferably contain, calculated by weight of the dry matter contained therein, 50-80 wt.% protein, 0-5 wt.% fat and 3-30 wt.% dietary fiber. More preferably, the TVP particles contain, calculated by weight of the dry matter that is contained therein, 65-75 wt.% protein, 0.5-4 wt.% fat and 6-24 wt.% dietary fiber.

Preferably, at least 80 wt.%, more preferably at least 90 wt.% of the total amount of protein of the TVP particles is plant protein selected from soy protein, legume protein, wheat protein, rice protein and combinations thereof. Examples of legume proteins that can be used include lentil protein, pea protein, fababean protein, lupin protein and combinations thereof

In a more preferred embodiment, at least 80 wt.%, more preferably at least 90 wt.% and most preferably at least 95 wt.% of the total amount of protein of the TVP particles is protein selected from soy protein, pea protein, gluten and combinations thereof. According to a particularly preferred embodiment, at least 70 wt.%, more preferably at least 80 wt.%, most preferably at least 85 wt.% of the total amount of protein of the TVP particles is soy protein.

The hydrated TVP pieces are preferably prepared by mixing 1 part by weight of the TVP particles with 1.5 to 3 parts by weight of water.

The present process according to claim 1 comprises mixing the hydrated TVP pieces with methyl cellulose, plant protein concentrate, fat, water and defibrillated hydrated TFVP material to produce a vegetarian dough. The inclusion of the defibrillated hydrated TFVP material was found to contribute to the cohesiveness and eating quality of the vegetarian burger.

The defibrillated hydrated TFVP material is prepared by combining a texturized fibrous vegetable protein (TFVP) material with water to produce a hydrated TFVP material, followed by processing the hydrated TFVP material in a meat grinder to produce defibrillated hydrated TFVP material. The terms "defibrillated hydrated TFVP material" and "hydrated TVP microfiber" are used interchangeably. The term "texturized fibrous vegetable protein material" as used herein refers to pieces of texturized vegetable protein that comprise aligned proteinaceous fibers.

In the present process the defibrillated hydrated TFVP material and the hydrated TVP pieces are typically mixed in a weight ratio that lies in the range of 1:3 to 3:1, more preferably in the range of 1:2 to 2:1.

The TFVP material employed in the present method preferably has a water content of not more than 15 wt.%, more preferably of not more than 12 wt.%, most preferably of not more than 10 wt.%.

Protein is preferably contained in the TFVP material in a concentration, calculated by weight of the dry matter that is contained in the TFVP material, of at least 50 wt.%, more preferably of at least 60 wt.%, most preferably of at least 62 wt.%.

The TFVP material typically contains, calculated by weight of the dry matter that is contained in the TFVP material, 50-80 wt.% protein, 0-5 wt.% fat and 3-30 wt.% dietary fiber. More preferably, the hydrated TFVP material contains, calculated by weight of the dry matter that is contained in the TFVP material, 65-75 wt.% protein, 0-3 wt.% fat and 6-15 wt.% dietary fiber.

Preferably, at least 80 wt.%, more preferably at least 90 wt.% of the protein contained in the TFVP material is vegetable protein selected from soy protein, legume protein, wheat protein and combinations thereof. Examples of legume proteins that can be used include lentil protein, pea protein, fababean protein, lupin protein and combinations thereof

Preferably, the TFVP material contains, calculated by weight of the dry matter contained in the TFVP material, at least 50 wt.% soy protein, more preferably at least 60 wt.% soy protein.

According to a preferred embodiment, the TFVP material contains, calculated by weight of the dry matter contained in the TFVP material, 70-100 wt.% wt.% soy protein and 0-30 wt.% gluten, more preferably 80-99 soy protein and 1-20 wt.% gluten, more preferably 90-98 soy protein and 2-10 wt.% gluten.

According to another preferred embodiment, the TFVP material contains, calculated by weight of the dry matter contained in the TFVP material, 0.5-10 wt.% starch, more preferably 1-5 wt.% starch.

The hydrated TFVP material is preferably prepared by mixing 1 part by weight of the TFVP material with 1.5 to 3 parts by weight of water.

In a preferred embodiment, the present process comprises mixing hydrated TVP pieces with methyl cellulose, plant protein concentrate, water, solid fat powder and liquid oil to produce a vegetarian dough whilst maintaining the temperature of the mixture below the melting point of the solid fat.

Separate addition of liquid oil and solid fat particles enables the preparation of the vegetarian burger at ambient or below ambient temperatures as both the fat particles and the liquid oil can easily be dispersed throughout the product mass during mixing. In contrast thereto, a blend of solid fat and liquid oil cannot easily be dispersed as such a blend is a semi-solid mass at ambient temperature. In order to disperse such a semi-solid mass, high shear conditions need to be applied that have an adverse effect on the structure of the vegetarian burger. An important advantage associated with the preparation of the vegetarian burger at near ambient temperature resides in the fact that oxidation of the unsaturated fatty acids in the liquid oil is effectively minimised.

In accordance with a preferred embodiment, at least 80 wt.% of the particles of solid fat powder employed in the process has a particle size, as determined by laser diffraction, in the range of 35-350 µm.

In accordance with a preferred embodiment, the mixing of the hydrated TVP pieces with water, methyl cellulose, plant protein concentrate, fat powder and liquid oil is carried out in a device that does not exert high shear conditions. Accordingly, in a preferred embodiment, a paddle mixer, a conical screw mixer or a bowl mixer is used.

The hydrated TVP pieces, the methyl cellulose, the plant protein and the fat employed in the present process preferably are as specified herein before.

In one embodiment of the present process, the plant protein concentrate employed is a potato protein concentrate. The potato protein concentrate preferably contains at least 60 wt.%, more preferably at least 70 wt.% patatin by weight of dry matter

Preferably, the potato protein concentrate employed in the present process contains at least 60 wt.%, more preferably at least 70 wt.% non-denatured patatin by weight of dry matter.

In another embodiment of the process, the plant protein concentrate employed is a mung bean protein concentrate. The mung bean protein concentrate preferably contains at least 60 wt.%, more preferably at least 70 wt.% mung bean protein by weight of dry matter

Preferably, the mung bean protein concentrate employed in the present process contains at least 60 wt.%, more preferably at least 70 wt.% non-denatured mung bean protein by weight of dry matter.

According to a particularly preferred embodiment, during mixing of the present process, the ingredients of the patty are kept at a temperature in the range of -5°C to 30°C, more preferably in the range of -3°C to 20°C, most preferably in the range of -2°C to 16°C.

In the present process the vegetarian burger is preferably frozen and packaged. The present invention is further illustrated by the following non-limiting examples.

### Examples

### Example 1

Vegan burgers according to the present invention were prepared on the basis of the recipe shown in Table 1.

**Table 1**

| | Wt.% |
|---|---|
| Solbar Supertex 1050 ¹ | 9.89 |
| TVP Contex 300 ² | 9.25 |
| Methocel Bind 250 ³ | 2.20 |
| Solanic 200 ⁴ | 0.50 |
| Z-K5000 Rudinblack ⁵ | 0.05 |
| Pepper | 0.20 |
| Salt | 0.40 |
| Caramel sugar NCS23P ⁶ | 0.15 |
| Flavouring | 1.20 |
| JFI Palmstearin 54 LT (MB) ⁷ | 9.00 |
| Sunflower oil | 7.00 |
| Water | 60.16 |

| | |
|---|---|
| 1 Textured fibrous vegetable protein; Solbar Ningbo Protein Technology, Ningbo, China (67.5 wt.% protein, 10.9 wt.% fibre, 6.6 wt.% carbohydrate, 0 wt.% fat) 2 Textured vegetable protein; Solbar Ningbo Protein Technology, Ningbo, China (68 wt.% protein, 8 wt.% moisture) 3 Methyl cellulose; The Dow Chemical Company, the Netherlands 4 Potato protein isolate; Avebe, the Netherlands 5 Vegetable Carbon (E 153); Huijbregts Groep, the Netherlands 6 Huijbregts Groep, the Netherlands 7 Palm stearin powder (melting point 51-55 °C), Juchem Food, Germany (Note: the remaining ingredients were obtained in Europe) | |

The burgers were prepared on lab-scale using the following procedure:
- 0.989 kg of Solbar Supertex 1050 was mixed with 2.471 kg tap water (10°C) in a vacuum bag. This pre-determined amount of water is sufficient to fully hydrate the Solbar Supertex 1050.The bag was sealed and stored at 7 °C;
- 0.925 kg of TVP Contex 300 was mixed with 2.35 kg tap water (10°C) and 20% of the vegetable carbon in a vacuum bag. This pre-determined amount of water is sufficient to fully hydrate the TVP Contex 300.The bag was sealed and stored at 7 °C;
- After 1 hour of hydration at 7 °C, the hydrated Solbar Supertex was introduced into a meat grinder using a 8 mm end plate to produce cylindrical strands having a length of 1-2 cm;
- The ground material was combined with the hydrated TVP Contex after the latter ingredient had been hydrated at 7 °C for 30 minutes in a Kenwood mixer. The potato protein and the methyl cellulose were added, followed by mixing for 2 minutes at low speed (speed 2);
- The remainder of the water was added, followed by mixing for 20 seconds;
- The remainder of the vegetable carbon and the caramel sugar were added, followed by mixing for 20 seconds;
- Flavouring, spices and salt were added, followed by mixing for 20 seconds;
- Palm stearin powder and sunflower oil were added, followed by mixing for 20 seconds;
- The dough mass so prepared was transferred into a bowl and put in a freezer to cool down to 1 °C (in 45 minutes);
- The dough mass was taken out of the freezer, mixed again for 20 seconds and shaped by hand into burger patties having a diameter of 12 cm and a thickness of 1 cm, using a patty shaper';
- The patties so obtained were frozen and stored at -21°C.

The microfibers content of the burger was determined using the procedure described herein before. It was found that 50 grams of the burger contained 5.3 grams of hydrated microfibers.

The microfibers content of the following two commercially available vegetarian burgers was also determined:
- "Beyond Meat Burger", El Segundo, CA, USA
- "Incredible Burger", Garden Gourmet, Nestlé, Switzerland
Both these commercially available vegetarian burgers contain significantly less than 1 gram of hydrated microfibers.

### Example 2

The vegan burgers of Example 1 were prepared for consumption by pan frying. One table spoon of sunflower oil was added to a 20cm diameter Tefal^{®} Teflon^{®} coated pan, which was placed on a medium heat gas stove to which the burger was added. The burger was pan fried for 4 minutes in total, 2 minutes on each side.

An expert panel (n=3) evaluated the appearance, taste and texture of the freshly prepared vegetarian burgers, using the attributes mentioned in Table 2. The vegan burger of Example 1 was compared to two commercially available vegetarian burgers:
A ("Beyond Meat Burger", El Segundo, CA, USA),
B ("Incredible Burger", Garden Gourmet, Nestlé, Switzerland),

The sensory attributes were scored on a scale of 1 to 5 (1 stands for 'unacceptable' and 5 for 'excellent'). The average and total average scores are listed in Table 2.

**Table 2**

| **Attributes** | **Example 1** | **A** | **B** |
|---|---|---|---|
| Bite | 5.0 | 2.3 | 2.3 |
| Elasticity | 4.0 | 3.7 | 2.7 |
| Juiciness | 3.7 | 4.0 | 3.0 |
| Granularity when chewing | 4.3 | 3.3 | 2.7 |
| Aftertaste/Off-flavour | 3.7 | 3.3 | 1.3 |
| Natural colour | 3.7 | 2.3 | 2.0 |
| Fried appearance | 3.7 | 2.0 | 3.3 |
| **Average score** | **4.0** | **3.0** | **2.5** |

### Example 3

Vegan burgers were prepared in the same way as in Example 1, except that instead of 0.5 wt.% potato protein isolate 2.0 wt.% mung bean isolate (80 wt.% protein) was used, and further in that the water content was increased with 3 wt.%, and the amount of textured fibrous vegetable protein was reduced with 4.5 wt.%.

When these vegan burgers were prepared for consumption by pan frying, they were found to have very similar organoleptic characteristics as the pan fried vegan burgers of Example 2.

## Claims

1. A process for preparing a vegetarian burger comprising the steps of mixing hydrated TVP pieces with methyl cellulose, plant protein concentrate, fat, water and defibrillated hydrated texturized fibrous vegetable protein (TFVP) material to produce a vegetarian dough;
said burger comprising hydrated TVP microfibers in the range of 2-28 wt.%, preferably 4-25 wt.%, more preferably 5-20 wt.% and most preferably 6-18 wt.% of the vegetarian burger (wet weight),
whereby the hydrated TVP microfibers are prepared by soaking dry texturized fibrous vegetable protein (TFVP) material with water and by defibrillating the material to release the hydrated TVP microfibers,
whereby said burger contains contain no animal products and
whereby said vegetarian burger contains, calculated by weight of the dry matter of the burger, 2.5-10 wt.%, more preferably 3.0-9.0 wt.%, most preferably 5.0-8.0 wt.% of methyl cellulose.

2. A process according to claim 1 wherein the defibrillated hydrated TFVP material and the hydrated TVP pieces are mixed in a weight ratio that lies in the range of 1:3 to 3:1, more preferably in the range of 1:2 to 2:1

3. A process according to any one of the preceding claims wherein liquid oil and solid fat particles are added separately to enable the preparation of the vegetarian burger at ambient or below ambient temperatures as both the fat particles and the liquid oil can easily be dispersed throughout the product mass during mixing.

4. A process according to any one of the preceding claims wherein during the step of mixing the ingredients of the burger, the temperature of these ingredients is kept in the range of -5°C to 30°C more preferably in the range of -3°C to 20°C, most preferably in the range of -2°C to 16°C.

5. A process according to any one of the preceding claims wherein the hydrated TVP microfiber comprise protein in a concentration, calculated by weight of the dry matter of the hydrated TVP microfibers, of at least 50 wt.%, more preferably of at least 60 wt.%, most preferably of at least 62 wt.%.

6. A process according to any one of the preceding claims whereby the hydrated TVP pieces of the vegetarian burger include TVP chunks having a weight of in the range of 20-800 mg,
whereby preferably, the vegetarian burger contains 30-70%, more preferably 35-60%, most preferably 36-55% by weight of the vegetarian burger of the hydrated TVP chunks,
whereby preferably the hydrated TVP chunks in the vegetarian burger contain, calculated by weight of the dry matter of the hydrated TVP chunks, 50-80 wt.% protein, 0-5 wt.% fat and 3-30 wt.% dietary fiber, more preferably, 65-75 wt.% 20 protein, 0.5-4 wt.% fat and 6-24 wt.% dietary fiber.

7. A process according to any one of the preceding claims whereby the hydrated TVP microfibers contain, calculated by weight of the dry matter of the hydrated TVP microfibers, 50-80 wt.% protein, 0-5 wt.% fat and 3-30 wt.% dietary fiber, more preferably, 65-75 wt.% protein, 0-3 wt.% fat and 6-15 wt.% dietary fiber.

8. A process according to any one of the preceding claims wherein the hydrated TVP microfibers contain, calculated by weight of the dry matter of the hydrated TVP microfibers, 0.5-10 wt.% starch, more preferably 1-5 wt.% starch.

9. A process according to any one of the preceding claims whereby the hydrated TVP microfibers are prepared by soaking one part by weight of the dry texturized fibrous vegetable protein (TFVP) material with 1.5 to 3 parts by weight of water and by defibrillating the material to release the hydrated TVP microfibers.

10. A vegetarian burger comprising hydrated TVP pieces that are held together by a binder suspension that contains water, fat, methyl cellulose and plant protein concentrate said burger comprising hydrated TVP microfibers in the range of 2-28 wt.%, preferably 4-25 wt.%, more preferably 5-20 wt.% and most preferably 6-18 wt.% of the vegetarian burger (wet weight), said burger contains no animal products, and whereby said vegetarian burger contains, calculated by weight of the dry matter of the burger, 2.5-10 wt.%, more preferably 3.0-9.0 wt.%, most preferably 5.0-8.0 wt.% of methyl cellulose.

11. A vegetarian burger according to claim 10 having an average diameter of 80-150 mm and an average height of 5-15 mm, said burger comprising the following components:
(a) 30-80% by weight of the vegetarian burger of hydrated textured vegetable protein (TVP) pieces;
(b) 15-50% by weight of the vegetable burger of a binder suspension containing the following ingredients
(b1) 2-12% by weight of the binder suspension of methyl cellulose;
(b2) 0.3-12% by weight of the binder suspension of plant protein selected from patatin and mung bean protein;
(b3) 25-70% by weight of the binder suspension of fat;
(b4) 25-70% by weight of the binder suspension of water;
wherein the combination of components (a) to (b) constitutes at least 80 wt.% of the vegetarian burger.

12. A vegetarian burger according to any one of preceding claims 10 or 11 whereby the hydrated TVP pieces of the vegetarian burger include TVP chunks having a weight of in the range of 20-800 mg,
whereby preferably, the vegetarian burger contains 30-70%, more preferably 35-60%, most preferably 36-55% by weight of the vegetarian burger of the hydrated TVP chunks, and preferably whereby
the hydrated TVP chunks in the vegetarian burger contain, calculated by weight of the dry matter of the hydrated TVP chunks, 50-80 wt.% protein, 0-5 wt.% fat and 3-30 wt.% dietary fiber,
more preferably, 65-75 wt.% 20 protein, 0.5-4 wt.% fat and 6-24 wt.% dietary fiber.

13. A vegetarian burger according to any one of preceding claims 10 to 12 whereby the hydrated TVP microfibers contain, calculated by weight of the dry matter of the hydrated TVP microfibers, 50-80 wt.% protein, 0-5 wt.% fat and 3-30 wt.% dietary fiber, more preferably, 65-75 wt.% protein, 0-3 wt.% fat and 6-15 wt.% dietary fiber.

14. Vegetarian burger according to any one of the preceding claims 10 to13, wherein the vegetarian burger contains liquid oil and solid fat as separate components.

15. Vegetarian burger according to any one of the preceding claims 10 to14, further comprising non-denatured patatin, wherein calculated by weight of the dry matter of the vegetarian burger, non-denatured patatin is preferably present in the vegetable burger in a concentration of 0.3-6.0 wt.%, more preferably 0.6-5.0 wt.% and preferably whereby
methyl cellulose and patatin are present in the vegetarian burger in a weight ratio of 1:1 to 8:1, more preferably, in a weight ratio of 3:2 to 6:1.

## Patentansprüche

1. Verfahren zur Herstellung eines vegetarischen Burgers, umfassend die Schritte des Mischens hydratisierter TVP-Stücke mit Methylcellulose, Pflanzenproteinkonzentrat, Fett, Wasser und defibrilliertem, hydratisiertem, texturiertem, faserigem Pflanzenprotein (TFVP)-Material, um einen vegetarischen Teig herzustellen;
wobei der Burger hydratisierte TVP-Mikrofasern in dem Bereich von 2-28 Gew.-%, vorzugsweise 4-25 Gew.-%, bevorzugter 5-20 Gew.-% und höchst bevorzugt 6-18 Gew.-% des vegetarischen Burgers (Nassgewicht) umfasst,
wobei die hydratisierten TVP-Mikrofasern durch Einweichen von trockenem, texturiertem, faserigem Pflanzenprotein (TFVP)-Material in Wasser und durch Defibrillieren des Materials zur Freisetzung der hydratisierten TVP-Mikrofasern hergestellt werden,
wobei der Burger keine tierischen Produkte enthält und wobei der vegetarische Burger, berechnet nach Gewicht der Trockenmasse des Burgers, 2,5-10 Gew.-%, bevorzugter 3,0-9,0 Gew.-%, höchst bevorzugt 5,0-8,0 Gew.-% Methylcellulose enthält.

2. Verfahren nach Anspruch 1, wobei das defibrillierte hydratisierte TFVP-Material und die hydratisierten TVP-Stücke in einem Gewichtsverhältnis gemischt werden, das in dem Bereich von 1:3 bis 3:1, bevorzugter in dem Bereich von 1:2 bis 2:1, liegt.

3. Verfahren nach irgendeinem der vorhergehenden Ansprüche, wobei flüssiges Öl und feste Fettpartikel separat hinzugefügt werden, um die Zubereitung des vegetarischen Burgers bei Umgebungstemperatur oder darunter zu ermöglichen, dass sowohl die Fettpartikel als auch das flüssige Öl während des Mischens leicht in der Produktmasse verteilt werden können.

4. Verfahren nach irgendeinem der vorliegenden Ansprüche, wobei während des Schritts des Mischens die Zutaten des Burgers die Temperatur dieser Zutaten in dem Bereich von -5°C bis 30°C, bevorzugter in dem Bereich von -3°C bis 20°C, höchst bevorzugt in dem Bereich von -2°C bis 16°C, gehalten wird.

5. Verfahren nach irgendeinem der vorhergehenden Ansprüche, wobei die hydratisierten TVP-Mikrofasern Protein in einer Konzentration, berechnet nach Gewicht der Trockenmasse der hydratisierten TVP-Mikrofasern, von mindestens 50 Gew.-%, bevorzugter von mindestens 60 Gew.-%, höchst bevorzugt von mindestens 62 Gew.-%, enthalten.

6. Verfahren nach irgendeinem der vorhergehenden Ansprüche, wobei die hydratisierten TVP-Stücke des vegetarischen Burgers TVP-Stückchen mit einem Gewicht in dem Bereich von 20-800 mg umfassen,
wobei der vegetarische Burger vorzugsweise 30-70%, bevorzugter 35-60%, höchst bevorzugt 36-55%, bezogen auf das Gewicht des vegetarischen Burgers, hydratisierte TVP-Stückchen enthält,
wobei die hydratisierten TVP-Stückchen in dem vegetarischen Burger vorzugsweise, berechnet nach Gewicht der Trockenmasse der hydratisierten TVP-Stückchen, 50-80 Gew.-% Protein, 0-5 Gew.-% Fett und 3-30 Gew.-% Ballaststoff, bevorzugter 65-75 Gew.-% Protein, 0,5-4 Gew.-% Fett und 6-24 Gew.-% Ballaststoff, enthalten.

7. Verfahren nach irgendeinem der vorhergehenden Ansprüche, wobei die hydratisierten TVP-Mikrofasern, berechnet nach Gewicht der Trockenmasse der hydratisierten TVP-Mikrofasern, 50-80 Gew.-% Protein, 0-5 Gew.-% Fett und 3-30 Gew.-% Ballaststoff, bevorzugter 65-75 Gew.-% Protein, 0-3 Gew.-% Fett und 6-15 Gew.-% Ballaststoff, enthalten.

8. Verfahren nach irgendeinem der vorhergehenden Ansprüche, wobei die hydratisierten TVP-Mikrofasern, berechnet nach Gewicht der Trockenmasse der hydratisierten TVP-Mikrofasern, 0,5-10 Gew.-% Stärke, bevorzugter 1-5 Gew.-% Stärke, enthalten.

9. Verfahren nach irgendeinem der vorhergehenden Ansprüche, wobei die hydratisierten TVP-Mikrofasern durch Einweichen eines Teils, bezogen auf das Gewicht des trockenen texturierten faserigen Pflanzenprotein (TFVP)-Materials in 1,5 bis 3 Gewichtsteilen Wasser und Defibrillieren des Materials zur Freisetzung der hydratisierten TVP-Mikrofasern erhalten werden.

10. Vegetarischer Burger, umfassend hydratisierte TVP-Stücke, die durch eine Bindemittelsuspension zusammengehalten werden, die Wasser, Fett, Methylcellulose und Pflanzenproteinkonzentrat enthält, wobei der Burger hydratisierte TVP-Mikrofasern in dem Bereich von 2-28 Gew.-%, vorzugsweise 4-25 Gew.-%, bevorzugter 5-20 Gew.-% und höchst bevorzugt 6-18 Gew.-% des vegetarischen Burgers (Nassgewicht), umfasst,
wobei der Burger keine tierischen Produkte enthält und
wobei der vegetarische Burger, berechnet nach Gewicht der Trockenmasse des Burgers, 2,5-10 Gew.-%, bevorzugter 3,0-9,0 Gew.-%, höchst bevorzugt 5,0-8,0 Gew.-% Methylcellulose enthält.

11. Vegetarischer Burger nach Anspruch 10 mit einem durchschnittlichen Durchmesser von 80-150 mm und einer durchschnittlichen Höhe von 5-15 mm, wobei der Burger die folgenden Komponenten umfasst:
(a) 30-80%, bezogen auf das Gewicht des vegetarischen Burgers, hydratisierte texturierte Pflanzenprotein (TVP)-Stücke;
(b) 15-50%, bezogen auf das Gewicht des vegetarischen Burgers, einer Bindemittelsuspension, die die folgenden Zutaten umfasst:
(b1) 2-12%, bezogen auf das Gewicht der Bindemittelsuspension, Methylcellulose;
(b2) 0,3-12%, bezogen auf das Gewicht der Bundemittelsuspension, Pflanzenprotein, ausgewählt unter Patatin und Mungbohnenprotein;
(b3) 25-70%, bezogen auf das Gewicht der Bindemittelsuspension, Fett;
(b4) 25-70%, bezogen auf das Gewicht der Bindemittelsuspension, Wasser;
wobei die Kombination der Komponenten (a) bis (b) mindestens 80 Gew.-% des vegetarischen Burgers ausmacht.

12. Vegetarischer Burger nach irgendeinem der vorhergehenden Ansprüche 10 oder 11, wobei die hydratisierten TVP-Stücke des vegetarischen Burgers TVP-Stückchen mit einem Gewicht in dem Bereich von 20-800 mg umfassen,
wobei der vegetarische Burger vorzugsweise 30-70%, bevorzugter 35-60%, höchst bevorzugt 36-55%, bezogen auf das Gewicht des vegetarischen Burgers, hydratisierte TVP-Stückchen enthält und wobei die hydratisierten TVP-Stückchen in dem vegetarischen Burger vorzugsweise, berechnet nach Gewicht der Trockenmasse der hydratisierten TVP-Stückchen, 50-80 Gew.-% Protein, 0-5 Gew.-% Fett und 3-30 Gew.-% Ballaststoff,
bevorzugter 65-75 Gew.-% Protein, 0,5-4 Gew.-% Fett und 6-24 Gew.-% Ballaststoff, enthalten.

13. Vegetarischer Burger nach irgendeinem der vorhergehenden Ansprüche 10 bis 12, wobei die hydratisierten TVP-Mikrofasern, berechnet nach Gewicht der Trockenmasse der hydratisierten TVP-Mikrofasern, 50-80 Gew.-% Protein, 0-5 Gew.-% Fett und 3-30 Gew.-% Ballaststoff, bevorzugter 65-75 Gew.-% Protein, 0-3 Gew.-% Fett und 6-15 Gew.- Ballaststoff, enthalten.

14. Vegetarischer Burger nach irgendeinem der vorhergehenden Ansprüche 10 bis 13, wobei der vegetarische Burger flüssiges Öl und festes Fett als separate Komponenten enthält.

15. Vegetarischer Burger nach irgendeinem der vorhergehenden Ansprüche 10 bis 14, der außerdem nicht-denaturiertes Patatin umfasst, wobei, berechnet nach Gewicht der Trockenmasse des vegetarischen Burgers, in dem vegetarischen Burger vorzugsweise nicht-denaturiertes Patatin in einer Konzentration von 0,3-6,0 Gew.-%, bevorzugter 0,6-5,0 Gew.-% vorliegt und wobei vorzugsweise Methylcellulose und Patatin in dem vegetarischen Burger in einem Gewichtsverhältnis von 1:1 bis 8:1, bevorzugter in einem Gewichtsverhältnis von 3:2 bis 6:1, vorliegen.

## Revendications

1. Procédé pour préparer un hamburger végétarien, comprenant les étapes de mélange de morceaux de TVP hydratée avec de la méthylcellulose, du concentré de protéine végétale, de la graisse, de l'eau et de la matière protéique végétale fibreuse texturée (TFVP) hydratée défibrillée pour produire une pâte végétarienne ;
ledit hamburger comprenant des microfibres de TVP hydratée à raison de 2 à 28 % en poids, de préférence 4 à 25 % en poids, mieux encore 5 à 20 % en poids et tout spécialement 6 à 18 % en poids du hamburger végétarien (en poids humide),
moyennant quoi les microfibres de TVP hydratée sont préparées par trempage de matière protéique végétale fibreuse texturée (TFVP) sèche avec de l'eau et par défibrillation de la matière pour libérer les microfibres de TVP hydratée,
moyennant quoi ledit hamburger ne contient pas de produit d'origine animale et
moyennant quoi ledit hamburger végétarien contient, calculés en poids de la matière sèche du hamburger, 2,5 à 10 % en poids, mieux encore 3,0 à 9,0 % en poids, tout spécialement 5,0 à 8,0 % en poids de méthylcellulose.

2. Procédé selon la revendication 1, dans lequel la matière TFVP hydratée défibrillée et les morceaux de TVP hydratée sont mélangés en un rapport en poids situé dans la plage allant de 1/3 à 3/1, mieux encore dans la plage allant de 1/2 à 2/1.

3. Procédé selon l'une quelconque des revendications précédentes, dans lequel de l'huile liquide et des particules de graisse solide sont ajoutées séparément pour permettre la préparation du hamburger végétarien à la température ambiante ou à une température plus basse étant donné que tant les particules de graisse que l'huile liquide peuvent aisément être dispersées dans toute la masse de produit pendant le mélange.

4. Procédé selon l'une quelconque des revendications précédentes, dans lequel, pendant l'étape de mélange des ingrédients du hamburger, la température de ces ingrédients est maintenue dans la plage allant de -5°C à 30°C, mieux encore dans la plage allant de -3°C à 20°C, tout spécialement dans la plage allant de -2°C à 16°C.

5. Procédé selon l'une quelconque des revendications précédentes, dans lequel les microfibres de TVP hydratée comprennent de la protéine à une concentration, calculée en poids de la matière sèche des microfibres de TVP hydratée, d'au moins 50 % en poids, mieux encore d'au moins 60 % en poids, tout spécialement d'au moins 62 % en poids.

6. Procédé selon l'une quelconque des revendications précédentes, moyennant quoi les morceaux de TVP hydratée du hamburger végétarien comprennent des fragments de TVP ayant un poids situé dans la plage allant de 20 à 800 mg,
moyennant quoi de préférence le hamburger végétarien contient 30 à 70 %, mieux encore 35 à 60 %, tout spécialement 36 à 55 %, en poids du hamburger végétarien, des fragments de TVP hydratée,
moyennant quoi de préférence les fragments de TVP hydratée dans le hamburger végétarien contiennent, calculés en poids de la matière sèche des fragments de TVP hydratée, 50 à 80 % en poids de protéine, 0 à 5 % en poids de matière grasse et 3 à 30 % en poids de fibres alimentaires, mieux encore 65 à 75 % en poids de protéine 20, 0,5 à 4 % en poids de matière grasse et 6 à 24 % en poids de fibres alimentaires.

7. Procédé selon l'une quelconque des revendications précédentes, moyennant quoi les microfibres de TVP hydratée contiennent, calculés en poids de la matière sèche des microfibres de TVP hydratée, 50 à 80 % en poids de protéine, 0 à 5 % en poids de matière grasse et 3 à 30 % en poids de fibres alimentaires, mieux encore 65 à 75 % en poids de protéine, 0 à 3 % de matière grasse et 6 à 15 % en poids de fibres alimentaires.

8. Procédé selon l'une quelconque des revendications précédentes, dans lequel les microfibres de TVP hydratée contiennent, calculés en poids de la matière sèche des microfibres de TVP hydratée, 0,5 à 10 % en poids d'amidon, mieux encore 1 à 5 % en poids d'amidon.

9. Procédé selon l'une quelconque des revendications précédentes, moyennant quoi les microfibres de TVP hydratée sont préparées par trempage d'une partie en poids de la matière protéique végétale fibreuse texturée (TFVP) sèche avec 1,5 à 3 parties en poids d'eau et par défibrillation du matériau pour libérer les microfibres de TVP hydratée.

10. Hamburger végétarien comprenant des morceaux de TVP qui sont maintenus ensemble par une suspension de liant qui contient de l'eau, de la graisse, de la méthylcellulose et du concentré de protéine végétale, ledit hamburger comprenant des microfibres de TVP hydratée à raison de 2 à 28 % en poids, de préférence 4 à 25 % en poids, mieux encore 5 à 20 % en poids et tout spécialement 6 à 18 % en poids du hamburger végétarien (en poids humide),
lequel hamburger ne contient pas de produit d'origine animale, et
moyennant quoi ledit hamburger végétarien contient, calculés en poids de la matière sèche du hamburger, 2,5 à 10 % en poids, mieux encore 3,0 à 9,0 % en poids, tout spécialement 5,0 à 8,0 % en poids de méthylcellulose.

11. Hamburger végétarien selon la revendication 10, ayant un diamètre moyen de 80 à 150 mm et une hauteur moyenne de 5 à 15 mm, ledit hamburger comprenant les composants suivants :
(a) 30 à 80 %, en poids du hamburger végétarien, de morceaux de protéine végétale texturée (TVP) hydratée ;
(b) 15 à 50 %, en poids du hamburger végétarien, d'une suspension de liant contenant les ingrédients suivants :
(b1) 2 à 12 %, en poids de la suspension de liant, de méthylcellulose ;
(b2) 0,3 à 12 %, en poids de la suspension de liant, de protéine végétale choisie parmi la patatine et la protéine de haricot mungo ;
(b3) 25 à 70 %, en poids de la suspension de liant, de graisse ;
(b4) 25 à 70 %, en poids de la suspension de liant, d'eau ;
dans lequel la combinaison des composants (a) à (b) constitue au moins 80 % en poids du hamburger végétarien.

12. Hamburger végétarien selon l'une quelconque des revendications 10 et 11, moyennant quoi les morceaux de TVP hydratée du hamburger végétarien comprennent des fragments de TVP ayant un poids situé dans la plage allant de 20 à 800 mg,
moyennant quoi de préférence le hamburger végétarien contient 30 à 70 %, mieux encore 35 à 60 %, tout spécialement 36 à 55 %, en poids du hamburger végétarien, des fragments de TVP hydratée, et de préférence moyennant quoi
les fragments de TVP hydratée dans le hamburger végétarien contiennent, calculés en poids de la matière sèche des fragments de TVP hydratée, 50 à 80 % en poids de protéine, 0 à 5 % en poids de matière grasse et 3 à 30 % en poids de fibres alimentaires,
mieux encore 65 à 75 % en poids de protéine 20, 0,5 à 4 % en poids de matière grasse et 6 à 24 % en poids de fibres alimentaires.

13. Hamburger végétarien selon l'une quelconque des revendications 10 à 12, moyennant quoi les microfibres de TVP hydratée contiennent, calculés en poids de la matière sèche des microfibres de TVP hydratée, 50 à 80 % en poids de protéine, 0 à 5 % en poids de matière grasse et 3 à 30 % en poids de fibres alimentaires, mieux encore 65 à 75 % en poids de protéine, 0 à 3 % de matière grasse et 6 à 15 % en poids de fibres alimentaires.

14. Hamburger végétarien selon l'une quelconque des revendications 10 à 13, lequel hamburger végétarien contient de l'huile liquide et de la graisse solide sous la forme de composants séparés.

15. Hamburger végétarien selon l'une quelconque des revendications 10 à 14, comprenant en outre de la patatine non dénaturée, dans lequel, calculée en poids de la matière sèche du hamburger végétarien, la patatine non dénaturée est de préférence dans le hamburger végétal à une concentration de 0,3 à 6,0 % en poids, mieux encore de 0,6 à 5,0 % en poids, et de préférence moyennant quoi
de la méthylcellulose et de la patatine sont présentes dans le hamburger végétarien en un rapport en poids de 1/1 à 8/1, mieux encore en un rapport en poids de 3/2 à 6/1.
